# EUROPEAN PATENT SPECIFICATION

(11) **EP 4 083 713 B1**
(45) Date of publication and mention of the grant of the patent: **28.10.2026**
(21) Application number: 22167457.5
(22) Date of filing: 08.04.2022
(51) Int. Cl.: G03G 15/00, G03G 21/16, B41J 29/13, B65H 31/22, B41J 13/10

(54) **IMAGE FORMING APPARATUS**
BILDERZEUGUNGSVORRICHTUNG
APPAREIL DE FORMATION D'IMAGES

(30) Priority: 28.04.2021 JP 2021076247
(43) Date of publication of application: 02.11.2022
(73) Proprietor: CANON KABUSHIKI KAISHA, OHTA-KU Tokyo 146-8501 (JP)
(72) Inventor: KASUYA, Yoshisuke, Ohta-ku, 146-8501 (JP)
(74) Representative: Canon Europe Limited

(56) References cited:
- JP-A- 2002 362 812
- JP-A- 2012 206 795
- JP-A- 2013 147 335
- US-A1- 2003 222 392
- US-A1- 2008 145 122

## Description

### BACKGROUND OF THE INVENTION

### Field of the Invention

The present invention relates to an image forming apparatus having an improved accessibility to internal units included in a main body of the image forming apparatus.

### Description of the Related Art

In use of conventional image forming apparatuses, such as printers, when an internal unit, such as a scanner unit, disposed inside a main body of the image forming apparatus fails or reaches the end of the life, replacement of the internal unit is performed by a service engineer. The service engineer removes a plurality of outer surface members including a top cover of the main body before replacing the internal unit. In a case where an expansion unit, such as a document reading apparatus, is disposed on the top of a printer, the service engineer needs to perform a complicated work to remove the expansion unit before removing a top cover of a main body of the printer.

In an image forming apparatus discussed in Japanese Patent Application Laid-Open No. 9-106238, an electrical circuit board is disposed inside a main body of the image forming apparatus at a portion below a discharge tray serving as a part of a top cover of the apparatus main body. An opening and closing member is provided on the discharge tray at a portion corresponding to the electrical circuit board, for use in a case where a new board is attached to the electrical circuit board to expand a function. This configuration enables a user to quickly access the electrical circuit board inside the main body of the image forming apparatus from an opening of the opening and closing member.

However, in the configuration discussed in Japanese Patent Application Laid-Open No. 9-106238, the size of the opening and closing member needs to be increased in a case where a new board having an increased size is attached. Consequently, a wide space for opening and closing the opening and closing member needs to be provided, and in addition, in a case where an expansion unit, such as a document reading apparatus, is provided on the top face of the printer, the opening and closing member and the expansion unit may possibly interfere with each other.

In the configuration discussed in Japanese Patent Application Laid-Open No. 9-106238, the portion where the opening and closing member is disposed is recessed from a surface of the discharge tray for stacking a recording medium. Consequently, an edge of the recording medium discharged onto the discharge tray may be caught by the recessed portion, which causes a curl in the recording medium.

JP 2012 206795 A discusses providing a recording device in which a supporting member can be easily changed during changing operation even while the supporting member is surely assembled to a device body. The discharged paper receiving tray moves between a housing position and a using position while being guided by a tray guide. In the second guide groove guiding the second boss formed in the discharged paper tray, the end part of the using position side of the discharged paper receiving tray is not closed and assumes an opening shape (an opening part) and is closed by a front surface panel being a housing member in which the opening part constitutes an appearance of the device, thereby the discharged paper receiving tray can be removed (changed) without removing the tray guide by removing the front surface panel.

JP 2013 147335 A discusses providing an image forming apparatus capable of preventing a tray member from being disengaged from an apparatus body even when a load is applied to the tray member, such as when an article or a hand hits against the tray member. An image forming apparatus includes: a cover member turnably supported relative to an apparatus body between a use position covering at least a portion of an upper part of the apparatus body (body casing) and an open position exposing the upper part of the apparatus body; and a tray member provided so as to extend from a gap between the apparatus body and the cover member, for placing thereon a sheet discharged from the apparatus body. The tray member is configured to be attachable to/detachable from the apparatus body when the cover member is in the open position and is configured not to be disengaged from the apparatus body by being regulated by the cover member when the cover member is in the use position.

JP 2002 362812 A discusses providing an image forming device capable of carrying sheets toward a post-treatment device while preventing the decrease in the quantity of the stackable sheets. The image forming device is provided with a discharge member discharging the sheet having the image formed by an image forming part and a sheet discharger tray provided in the upper part of the image forming part and storing the sheets discharged by the discharge member. This device is provided with a transport unit, which is provided with a sheet discharge part installed replaceably with the sheet discharge tray and storing the sheets discharged by the discharge member in its upper part, and a transport carrier passage carrying the sheets toward the post-processing device in its inside; and a changeover unit having a carrier passage changeover member detachably attached to a sheet carrier passage between the image forming device and the discharge member and changing over the carrier direction of the sheets between the side of the discharge member and the side of the transport carrier passage.

### SUMMARY OF THE INVENTION

The present invention is directed to providing an image forming apparatus having an improved accessibility to internal units without providing an opening/closing member on the discharge tray.

According to a first aspect of the present invention, there is provided an image forming apparatus as specified in claims 1 to 15.

Further features of the present invention will become apparent from the following description of embodiments with reference to the attached drawings.

### BRIEF DESCRIPTION OF THE DRAWINGS

Fig. 1 is a cross-sectional view illustrating a configuration of an image forming apparatus.
Figs. 2A and 2B are diagrams each illustrating a configuration of outer surface members of the image forming apparatus.
Figs. 3A to 3D are diagrams illustrating a configuration of a discharge tray unit.
Figs. 4A and 4B are cross-sectional views each illustrating a discharge tray unit configuration.
Figs. 5A and 5B are diagrams illustrating a procedure for detaching a process cartridge from the image forming apparatus.
Figs. 6A and 6B are diagrams illustrating a procedure for detaching a discharge tray according to a first embodiment.
Figs. 7A and 7B are diagrams illustrating a procedure for detaching an exposure apparatus according to the first embodiment.
Fig. 8 is a block diagram illustrating an image forming apparatus according to a second embodiment.
Figs. 9A and 9B are diagrams illustrating a procedure for detaching a discharge tray according to the second embodiment.
Fig. 10 is a diagram illustrating a configuration of an image forming apparatus according to a third embodiment.
Figs. 11A and 11B are diagrams illustrating a procedure for detaching a discharge tray according to the third embodiment.
Figs. 12A to 12C are diagrams illustrating a procedure for detaching a discharge unit according to a fourth embodiment.

### DESCRIPTION OF THE EMBODIMENTS

Preferred embodiments of the present invention will be illustratively described in detail below. However, dimensions, materials, shapes, and relative arrangements of components according to the following embodiments are to be modified as required in accordance with the configuration of an apparatus according to the present disclosure and other various conditions. Therefore, unless otherwise specifically described, the scope of the present disclosure is not limited to the following embodiments. Each of the embodiments of the present invention described below can be implemented solely or as a combination of a plurality of the embodiments or features thereof where necessary or where the combination of elements or features from individual embodiments in a single embodiment is beneficial.

### (Overall Configuration of Image Forming Apparatus)

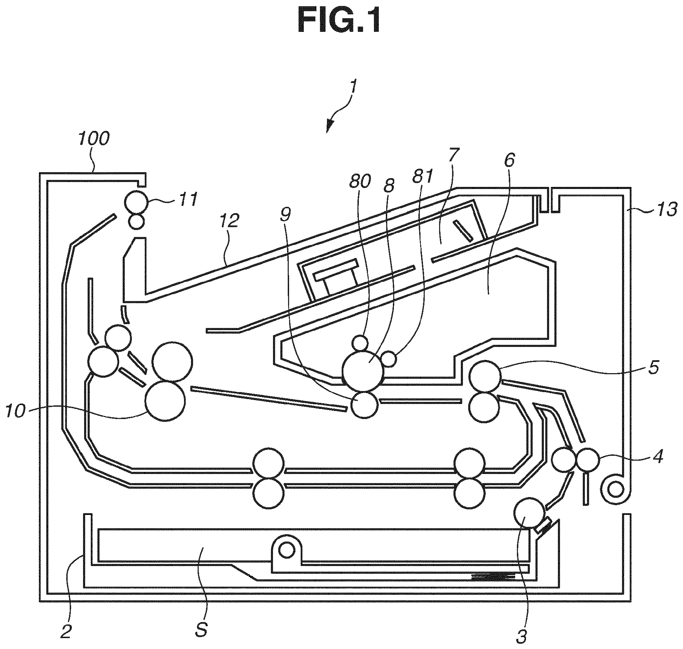

Fig. 1 is a cross-sectional view illustrating an image forming apparatus 1 according to a first embodiment. The image forming apparatus 1 according to the present embodiment is a monochromatic laser beam printer employing the electrophotographic method. The image forming apparatus 1 forms an image on a recording medium, such as a recording sheet and an overhead projector (OHP) sheet, based on a signal transmitted from an external apparatus, such as a computer, that is connected and communicates with the image forming apparatus 1.

The image forming apparatus 1 includes a drum-shaped electrophotographic photosensitive member (hereinafter referred to as a photosensitive drum 8) as an image bearing member. The photosensitive drum 8 includes a cylindrical drum base made of aluminum or nickel, applied with a photosensitive agent, such as an organic light semiconductor (OPC), amorphous selenium, and an amorphous silicon. The photosensitive drum 8 is rotatably supported by a main body frame (not illustrated), and is driven to rotate at a predetermined speed by a driving source. The photosensitive drum 8 is surrounded by a charge member 80, a development member 81, and a transfer roller 9 serving as a transfer member, in this order along the rotational direction. An exposure apparatus 7 is disposed above the photosensitive drum 8. The photosensitive drum 8, the charge member 80, and the development member 81 are included in a process cartridge 6 that is integrally attachable to and detachable from an apparatus main body 100. The process cartridge 6 is attachable to and detachable from the apparatus main body 100 from an opening of a front door 13 on the front side of the image forming apparatus 1. The apparatus main body 100 is formed of the apparatus main body frame and outer surface members.

As another configuration, the image forming apparatus 1 includes a sheet cassette 2 for stacking recording media S, a feed roller 3, a conveyance roller pair 4, a registration roller pair 5, a fixing apparatus 10, a discharge roller 11, and a discharge tray 12 along a conveyance path of a recording medium S. These members will be described in detail below.

### (Operations of Image Forming Apparatus)

Operations of the image forming apparatus 1 will be described below. The photosensitive drum 8 driven to rotate by the driving source is uniformly charged to a predetermined polarity and a predetermined potential by the charge member 80. The surface of the photosensitive drum 8 after the charging is subjected to image exposure based on image information by the exposure apparatus 7. Electrical charges of exposed portions are removed to form an electrostatic latent image. The electrostatic latent image is developed by the development member 81 to be visualized as a toner image. The toner image on the photosensitive drum 8 is transferred to the recording medium S by the transfer roller 9. The transfer roller 9 is biased toward the photosensitive drum 8 to form a transfer nip portion between the transfer roller 9 and the photosensitive drum 8. The transfer roller 9 performs a transfer operation for transferring the toner image on the photosensitive drum 8 (image bearing member) to the recording medium S at the transfer nip portion.

The recording medium S is fed from the sheet cassette 2 to the conveyance path by the feed roller 3. The recording medium S is conveyed to the transfer nip portion via the conveyance roller pair 4 and the registration roller pair 5. The toner image transferred from the photosensitive drum 8 to the recording medium S at the transfer nip portion is heated and fixed by the fixing apparatus 10. The recording medium S passed through the fixing apparatus 10 is discharged to the outside of the apparatus main body 100 by the discharge roller 11. The recording medium S discharged by the discharge roller 11 is held by the discharge tray 12.

### (Configuration of Outer Surface Members)

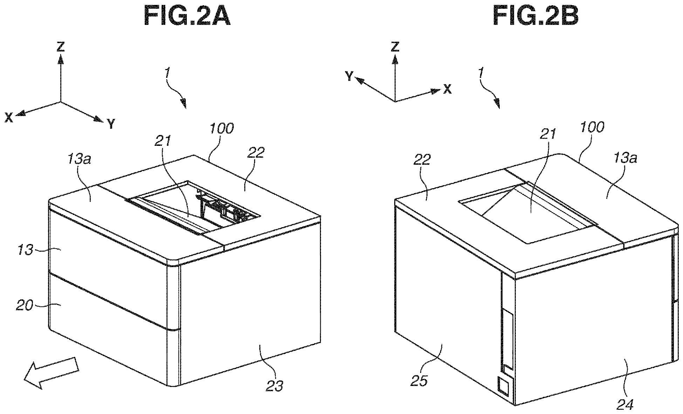

The outer surface members that cover the outside of the apparatus main body 100 will be described below with reference to Figs. 2A and 2B. In the apparatus main body 100 illustrated in Figs. 2A and 2B, the front side is on the positive side in the direction of the X axis, the rear side is on the negative side in the direction of the X axis, the right-hand side is on the positive side in the direction of the Y axis, the left-hand side is on the negative side in the direction of the Y axis, the upper side is on the positive side in the direction of the Z axis, and the lower side is on the negative side in the direction of the Z axis. Preferably, the XY plane is parallel to the horizontal plane, and the Z direction is parallel to the vertical direction. Fig. 2A is a perspective view of the image forming apparatus 1 when viewed from the upper right direction of the front side. Fig. 2B is a perspective view of the image forming apparatus 1 when viewed from the upper left direction of the rear side.

As illustrated in Figs. 2A and 2B, the front side of the apparatus main body 100 includes the front door 13, which is rotatable, and a cassette cover 20 for covering the front face of the sheet cassette 2 that can be drawn out from the front side of the apparatus main body 100. The front door 13 covering the front face also extends toward the top face of the apparatus main body 100. The part on the top face of the front door 13 is referred to as a top face part 13a. The top face of the apparatus main body 100 is provided with a discharge tray unit 21, which supports the discharged recording medium S, and a top cover 22. The top cover 22 is disposed at a part different from the top face part 13a and also different from a part where the discharge tray unit 21 covers the apparatus main body 100. The right-hand side face, the left-hand side face, and the rear face of the apparatus main body 100 are provided with a right cover 23, a left cover 24, and a rear cover 25, respectively.

The outer surface members of the apparatus main body 100 include the front door 13, the cassette cover 20, the discharge tray unit 21, the top cover 22, the right cover 23, the left cover 24, and the rear cover 25. Among the outer surface member of the apparatus main body 100, the front door 13 is disposed at a downstream portion in the direction in which the recording medium S is discharged onto the discharge tray unit 21.

### (Configuration of Discharge Tray Unit)

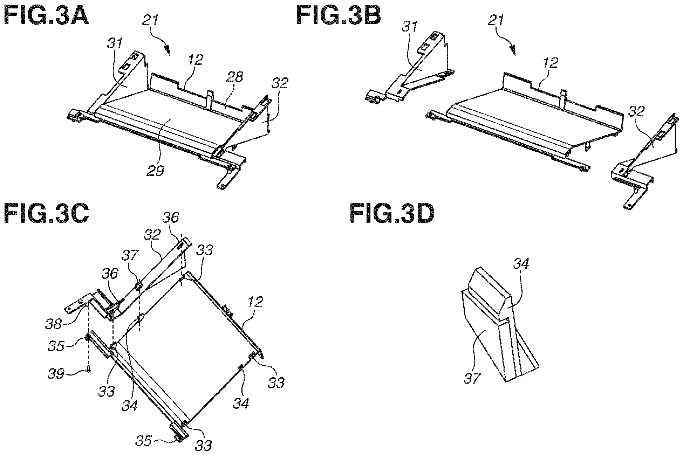

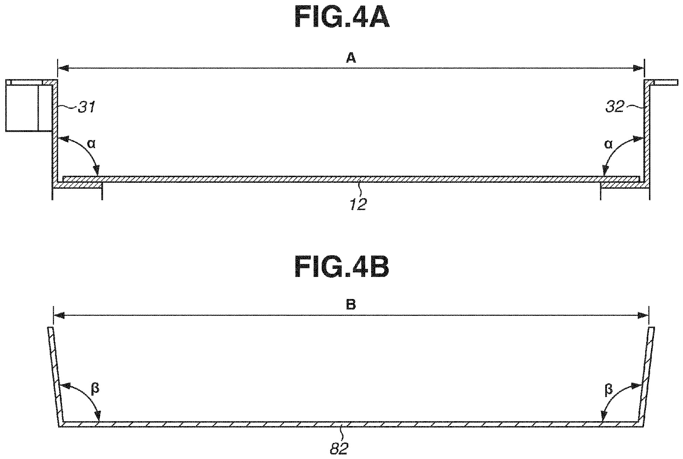

The discharge tray unit 21 will be described below with reference to Figs. 3A to 3C, 4A, and 4B. As illustrated in Fig. 3A, the discharge tray unit 21 includes three different parts which are the discharge tray 12, a left-hand side wall 31, and a right-hand side wall 32. The discharge tray 12 has a stacking surface 29 for stacking the discharged recording medium S, and a stacking wall 28 on which an edge of the recording medium S on the upstream side in the recording medium S discharge direction abuts.

The stacking surface 29 having a shape inclined with respect to the horizontal plane leads the discharged recording medium S toward the stacking wall 28. The stacking wall 28 regulates the position of the upstream edge of the recording medium S in the discharge direction of the recording medium S stacked on the stacking surface 29. The left-hand side wall 31 and the right-hand side wall 32 regulate the positions of both edges of the recording medium S in the width direction perpendicular to the discharge direction of the recording medium S stacked on the stacking surface 29.

As illustrated in Fig. 3A, the discharge tray 12, the left-hand side wall 31, and the right-hand side wall 32 are assembled into the discharge tray unit 21. On the other hand, as illustrated in Fig. 3B, the discharge tray unit 21 can be disassembled into the three parts.

Fig. 3C is a perspective view illustrating the discharge tray 12 and the right-hand side wall 32 when viewed from the reverse side. As illustrated in Fig. 3C, on each of the right- and the left-hand sides of the discharge tray 12, two bosses 33, an engaging portion 34, and a fixing portion 35 are provided. The right-hand side wall 32 illustrated in Fig. 3C has holes 36 into which the bosses 33 on the discharge tray 12 are to be inserted, an engaged portion 37 to be engaged with the engaging portion 34, and a fixed portion 38 to be fixed by the fixing portion 35. Although the left-hand side wall 31 is not illustrated in Fig. 3C, the left-hand side wall 31 also has holes 36, an engaged portion 37, and a fixed portion 38, like the right-hand side wall 32. The fixing portions 35 on the discharge tray 12 and the fixed portions 38 on the left-hand side wall 31 and the right-hand side wall 32 are fixed to each other by insertion of fixing members 39, such as screws.

Fig. 3D is an enlarged view illustrating the engaging portion 34 of the discharge tray 12 and the engaged portion 37 of the right-hand side wall 32. The engaging portion 34 of the discharge tray 12 has a hook shape, and the engaged portion 37 of the right-hand side wall 32 has a rib shape. By the engagement of the engaging portion 34 having the hook shape on the discharge tray 12 with the engaged portion 37 having the rib shape on the right-hand side wall 32, the discharge tray 12 is engaged with the right-hand side wall 32. The discharge tray 12 is engaged with the left-hand side wall 31 in a similar way. By insertion of the bosses 33 on the right- and left-hand sides of the discharge tray 12 into the holes 36 on the right-hand side wall 32 and the left-hand side wall 31, respectively, each of the engaging portions 34 and corresponding one of the engaged portions 37 are engaged with each other, and then the fixing portions 35 and the fixed portions 38 are fixed by the fixing members 39. Thus, the discharge tray unit 21 is formed.

Fig. 4A is a cross-sectional view illustrating the discharge tray unit 21 according to the present embodiment. As illustrated in Fig. 4A, an angle formed by the discharge tray 12 and the left-hand side wall 31 and an angle formed by the discharge tray 12 and the right-hand side wall 32 are each indicated as an angle α having an approximate right angle. In this configuration, a distance between the left-hand side wall 31 and the right-hand side wall 32 is indicated as a distance A. Fig. 4B is a cross-sectional view illustrating a discharge tray unit 82 having a single piece configuration according to a comparative example. According to the comparative example, since the portions corresponding to the discharge tray 12, the left-hand side wall 31, and the right-hand side wall 32 are integrally formed, the discharge tray unit 82 cannot be disassembled into parts, unlike the present embodiment. Likewise, an angle formed by the portions corresponding to the discharge tray 12 and the left-hand side wall 31 and an angle formed by the portions corresponding to the discharge tray 12 and the right-hand side wall 32 are each indicated as an angle β. A distance between the portions corresponding to the left-hand side wall 31 and the right-hand side wall 32 is indicated as a distance B.

The angle β is larger than the angle α because of the following reason. The discharge tray unit 21 is a resin member that is made through injection molding. In the configuration of the present embodiment, the members of the discharge tray 12, the left-hand side wall 31, and the right-hand side wall 32 can be separately created. However, in the configuration of the comparative example, these members need to be integrally formed by using one mold. To prevent scuffing when the member is extracted from the mold in the configuration of the comparative example, the angle β is made larger than the angle α to provide a predetermined draft angle on inclinations of the left-hand side wall 31 and the right-hand side wall 32. Consequently, the distance B becomes longer than the distance A.

According to the present embodiment, the discharge tray 12, the left-hand side wall 31, and the right-hand side wall 32 can be configured in such a manner that the angle α becomes an approximate right angle. Accordingly, the distance A can be made shorter than the distance B according to the comparative example. This enables reducing the widthwise size of the image forming apparatus 1.

### (Detaching Process Cartridge)

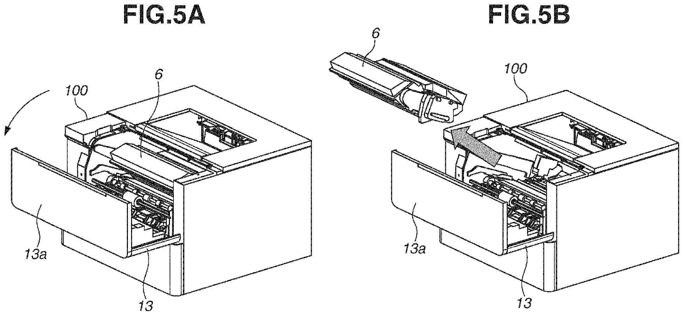

A procedure for detaching the process cartridge 6 will be described below with reference to Figs. 5A and 5B. A side face of the image forming apparatus 1 is provided with a release button (not illustrated) for releasing the closed state of the front door 13. When the user operates the release button, the engagement state of the front door 13 and the apparatus main body 100 is released, and the front door 13 rotates as illustrated in Fig. 5A. By the rotation of the front door 13, the process cartridge 6 attached inside the apparatus main body 100 is partly exposed to the outside. When the user pulls out the exposed process cartridge 6 toward the front side, the process cartridge is detached from the apparatus main body 100, as illustrated in Fig. 5B.

### (Detaching Discharge Tray)

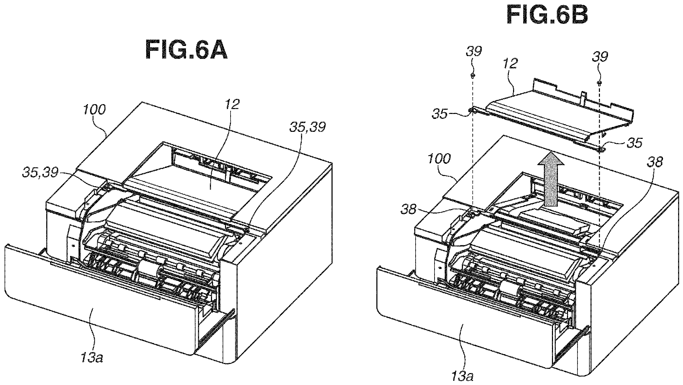

A procedure for detaching the discharge tray 12 will be described below with reference to Figs. 6A and 6B. By rotation of the front door 13 as illustrated in Fig. 6A, the portion corresponding to the top face part 13a of the front door 13 is also exposed to the outside. Consequently, the fixing portions 35 and the fixing members 39 that fix the discharge tray 12 to the apparatus main body 100 are exposed to the outside. The fixing portions 35 are fixed to the apparatus main body 100 via the fixing members 39, such as screws, together with the fixed portions 38 on the left-hand side wall 31 and the right-hand side wall 32. When detaching the discharge tray 12 from the apparatus main body 100, the user removes the fixing members 39 as illustrated in Fig. 6B and then pulls up the discharge tray 12. Thus, the engaging portions 34 on the discharge tray 12 are bent to release the engagement with the engaged portions 37 (illustrated in Fig. 3C). When the user pulls up the discharge tray 12 to take off the bosses 33 on the discharge tray 12 from the holes 36 (illustrated in Fig. 3C), the discharge tray 12 is detached from the apparatus main body 100. In this state, the left-hand side wall 31 and the right-hand side wall 32 remain in the apparatus main body 100.

### (Detaching Internal Unit)

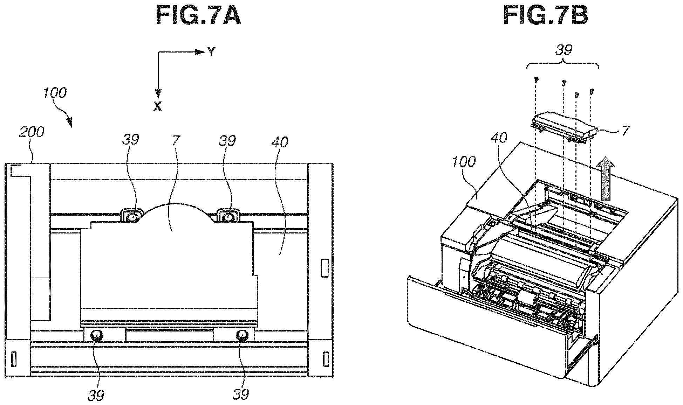

A procedure for detaching an internal unit disposed below the discharge tray 12 (inside the apparatus main body 100) will be described below with reference to Figs. 7A and 7B. According to the present embodiment, the internal unit is the exposure apparatus 7.

Fig. 7A is an enlarge view illustrating the vicinity of the exposure apparatus 7 with the discharge tray 12 detached, when viewed from above the apparatus main body 100. Fig. 7A illustrates an extract of an opening 200 that is exposed to the outside with the discharge tray 12 detached. The exposure apparatus 7 is fixed to a top frame 40 on the apparatus main body 100 by fixing members 39 at four different positions. In a state where the discharge tray 12 is detached, the exposure apparatus 7 and the four fixing members 39 are exposed to the outside of the image forming apparatus 1. Since the exposure apparatus 7 is smaller than the opening 200 in size, the user is able to access the exposure apparatus 7. When the fixing members 39 at four different positions are removed, as illustrated in Fig. 7B, the fixing state of the exposure apparatus 7 and the apparatus main body 100 is released, whereby the user can detach the exposure apparatus 7 from the apparatus main body 100.

### (Effects of Present Embodiment)

According to the configuration of the present embodiment, after detaching the discharge tray 12, the user can attach or detach the exposure apparatus 7 to or from the position below the discharge tray 12. According to the present embodiment, the user can separately detach the discharge tray 12 after opening the front door 13, whereby it is easier for the user to attach or detach the exposure apparatus 7 to or from the position below the discharge tray 12.

According to the configuration of the present embodiment, the user can also detach the discharge tray 12 from the apparatus main body 100 without removing the outer surface members other than the front door 13 (the cassette cover 20, the top cover 22, the right cover 23, the left cover 24, and the rear cover 25) from the apparatus main body 100. With this configuration, the user can access the exposure apparatus 7 easier than in the case of the conventional configuration.

Further, even after the discharge tray 12 is detached from the apparatus main body 100, the left-hand side wall 31 and the right-hand side wall 32 remain on the apparatus main body 100, whereby the user can replace the exposure apparatus 7 without touching unnecessary portions other than the exposure apparatus 7. This enables reducing a possibility that the user contacts other members and causes damage or failure to other members when accessing the exposure apparatus 7.

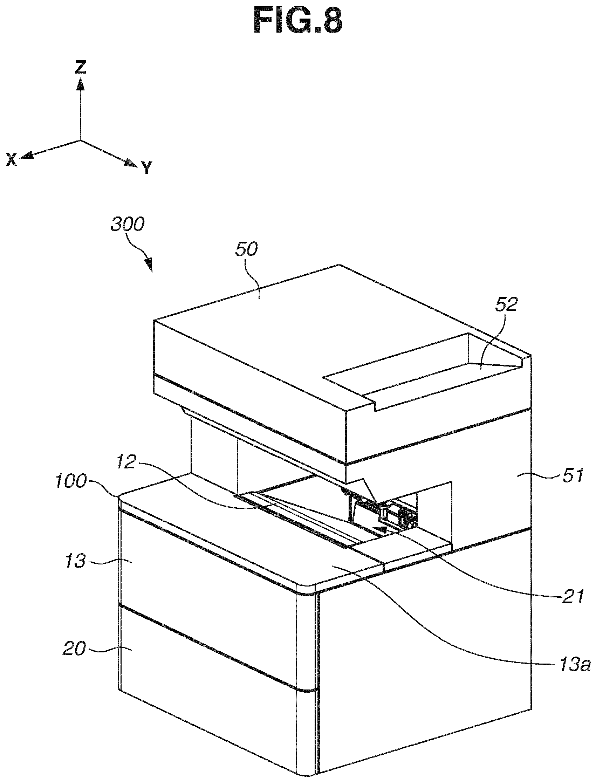

The configuration of an image forming apparatus 300 according to a second embodiment will be described below with reference to Fig. 8. The present embodiment (described below) has a similar configuration to the configuration according to the first embodiment, except for characteristic configurations, and thus the redundant descriptions will be omitted.

### (Overall Configuration of Image Forming Apparatus)

As illustrated in Fig. 8, the image forming apparatus 300 according to the present embodiment includes the image forming apparatus 1 according to the first embodiment and a document reading apparatus 50. The top face of the apparatus main body 100 is provided with a support unit 51 that supports the document reading apparatus 50. The support unit 51 is disposed on the top face of the apparatus main body 100, at a part different from the top face part 13a of the front door 13 and the part of the discharge tray unit 21.

The document reading apparatus 50 includes a reading sensor for automatically conveying document sheets stacked on a tray 52 to read texts and images printed on each of the document sheets. The read image data can be transmitted to a computer connected with the image forming apparatus 300, or image forming on the recording medium S can be started based on the read image data to copy information described on the document. The document reading apparatus 50 may be attachable to and detachable from the apparatus main body 100 as an optional apparatus, or integrally formed with the apparatus main body 100.

In the configuration of the present embodiment, a space is provided between the discharge tray unit 21 and the document reading apparatus 50 so that the user can take out the recording medium S discharged onto the discharge tray 12. Similar to the configuration of the first embodiment, the front door 13 is configured to rotate for attachment and detachment of the process cartridge 6 from the apparatus main body 100.

### (Detaching Discharge Tray and Internal Unit)

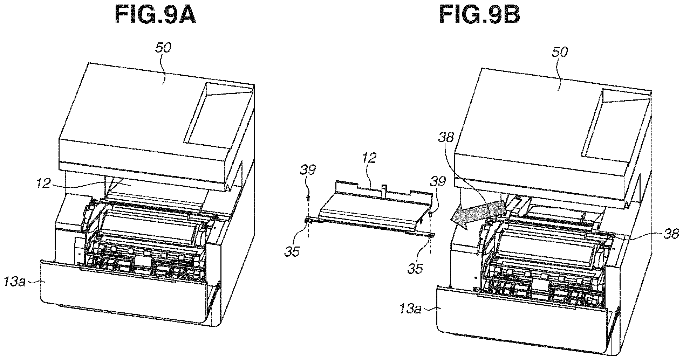

A procedure for detaching an internal unit disposed below the discharge tray 12 (inside the apparatus main body 100) will be described below with reference to Figs. 9A and 9B. According to the present embodiment, the internal unit is the exposure apparatus 7.

When the front door 13 is rotated as illustrated in Fig. 9A, the portion corresponding to top face part 13a of the front door 13 is also exposed to the outside. Consequently, the fixing portions 35 and the fixing members 39 that fix the discharge tray 12 to the apparatus main body 100 are exposed to the outside. The fixing portions 35 are fixed to the apparatus main body 100 by fixing members 39, such as screws, together with the fixed portions 38 on the left-hand side wall 31 and the right-hand side wall 32. When detaching the discharge tray 12 from the apparatus main body 100, the user removes the fixing members 39 and then pulls up the discharge tray 12, as illustrated in Fig. 9B. Thus, the engaging portions 34 on the discharge tray 12 are bent to release the engagement with the engaged portions 37 (illustrated in Fig. 3C). When the user pulls up the discharge tray 12 to take off the bosses 33 on the discharge tray 12 from the holes 36 (illustrated in Fig. 3C), the discharge tray 12 is detached from the apparatus main body 100. When the discharge tray 12 is detached, the exposure apparatus 7 disposed below the discharge tray 12 is exposed to the outside, whereby the user can access the exposure apparatus 7. A procedure for detaching the exposure apparatus 7 is similar to the procedures according to the first embodiment, and thus the redundant description will be omitted.

In a case where the document reading apparatus 50 is disposed on the upper part of the apparatus main body 100 in the configuration of the present embodiment, the user can attach and detach the discharge tray 12 and the exposure apparatus 7 via the space for taking out the recording medium S stacked on the discharge tray 12.

### (Effects of Present Embodiment)

Even in a case where the document reading apparatus 50 is disposed on the upper part of the apparatus main body 100, the configuration of the present embodiment enables the user to separately detach the discharge tray 12, whereby the user can easily attach and detach the exposure apparatus 7 disposed below the discharge tray 12.

Although the present embodiment has been described above using an example where the document reading apparatus 50 is disposed on the upper part of the apparatus main body 100, the present invention is not limited thereto. A post-processing apparatus, such as a sorting unit for sorting the recording medium S on which an image has been formed into a plurality of bins, may be disposed on the upper part of the apparatus main body 100.

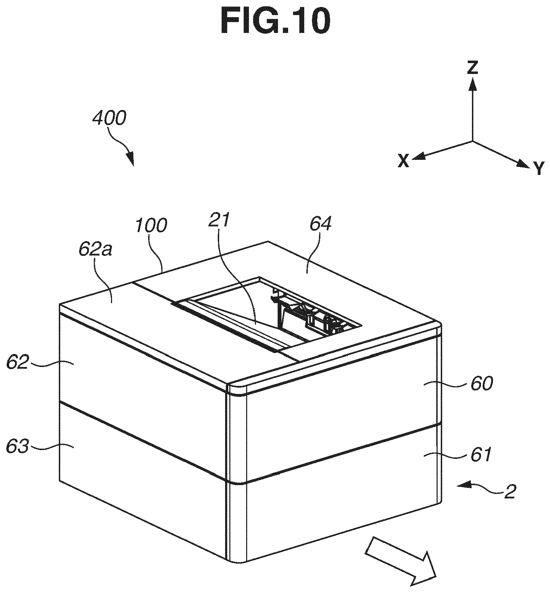

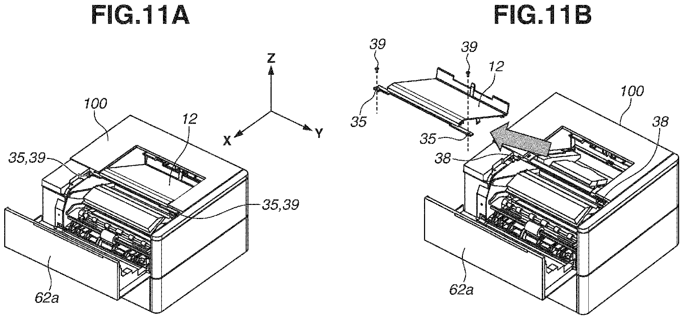

The configuration of an image forming apparatus 400 according to a third embodiment will be described below with reference to Figs. 10, 11A, and 11B. The present embodiment described below has a similar configuration to the configuration according to the first embodiment, except for characteristic configurations, and thus the redundant descriptions will be omitted.

### (Overall Configuration of Image Forming Apparatus)

According to the present embodiment, the recording medium S stacked on the sheet cassette 2 is conveyed from the left- to the right-hand side when viewed from the front face of the apparatus main body 100. Then, the recording medium S on which an image has been formed is discharged from the right- to the left-hand side by the discharge roller 11 and then stacked on the discharge tray 12. More specifically, the recording medium S is laterally conveyed with respect to the apparatus main body 100. In other words, according to the configuration of the present embodiment, the attachment and detachment direction of the sheet cassette 2 perpendicularly intersects with the discharge direction in which the recording medium S is discharged onto the discharge tray 12.

Fig. 10 is a perspective view illustrating the image forming apparatus 400 that laterally conveys the recording medium S. In the image forming apparatus 400, referring to Fig. 10, the front side is the positive side in the direction of the Y axis, the rear side is the negative side in the direction of the Y axis, the left-hand side is the positive side in the direction of the X axis, the right-hand side is the negative side in the direction of X axis, the upper side is the positive side in the direction of the Z axis, and the lower side is the negative side in the direction of the Z axis. Preferably, the XY plane is parallel to the horizontal plane, and the Z direction is parallel to the vertical direction.

As illustrated in Fig. 10, the sheet cassette 2 can be drawn out from the front side of the apparatus main body 100, and a cassette cover 61 is provided on the front side of the sheet cassette 2. A front cover 60 fixed to the apparatus main body 100 is disposed above the cassette cover 61. A door for attaching and detaching the process cartridge 6 is disposed on the left-hand side of the apparatus main body 100 and rotates as a left door 62. The left door 62 covering the left-hand side also extends toward the top face of the apparatus main body 100. The part on the top face of the left door 62 is referred to as a top face region 62a. A left cover 63 fixed to the apparatus main body 100 is disposed below the left door 62. The top face of the apparatus main body 100 is provided with the discharge tray unit 21, which is for supporting the discharged recording medium S, and a top cover 64. The top cover 64 is disposed at a part different from the part where the top face region 62a and the discharge tray unit 21 cover the apparatus main body 100. The right-hand side and the rear side of the apparatus main body 100 are provided with a right cover and a rear cover (not illustrated), respectively.

The configuration of the discharge tray unit 21 is the same as that according to the first embodiment. More specifically, the discharge tray unit 21 includes the discharge tray 12, the left-hand side wall 31, and the right-hand side wall 32. However, according to the present embodiment, the anteroposterior direction and the lateral direction are interchanged, as described in Fig. 10. For this reason, according to the present embodiment, the left-hand side wall 31 is referred to as a rear side wall, and the right-hand side wall 32 is referred to as a front side wall.

### (Detaching Discharge Tray and Internal Unit)

Figs. 11A and 11B illustrate procedures for detaching the discharge tray 12 from the image forming apparatus 400 that laterally conveys the recording medium S. According to the present embodiment, the internal unit is the exposure apparatus 7.

When the left door 62 is rotated as illustrated in Fig. 11A, the portion corresponding to the top face region 62a of the left door 62 is also exposed to the outside. Consequently, the fixing portions 35 and the fixing members 39 that fix the discharge tray 12 to the apparatus main body 100 are exposed to the outside. The fixing portions 35 are fixed to the apparatus main body 100 by the fixing members 39, such as screws, together with the fixed portions 38 on the front and rear side walls. When detaching the discharge tray 12 from the apparatus main body 100, the user removes the fixing members 39 and then pulls up the discharge tray 12, as illustrated in Fig. 11B. Thus, the engaging portions 34 on the discharge tray 12 are bent to release the engagement with the engaged portions 37 (illustrated in Fig. 3C). When the user pulls up the discharge tray 12 to take off the bosses 33 on the discharge tray 12 from the holes 36 (illustrated in Fig. 3C), the discharge tray 12 is detached from the apparatus main body 100. When the discharge tray 12 is detached, the exposure apparatus 7 disposed below the discharge tray 12 is exposed to the outside, whereby the user can access the exposure apparatus 7. A procedure for detaching the exposure apparatus 7 is similar to the procedures according to the first embodiment, and the redundant description will be omitted.

### (Effects of Present Embodiment)

According to the configuration of the present embodiment, detaching the discharge tray 12 allows user to access the exposure apparatus 7 disposed below the discharge tray 12 to attach and detach the exposure apparatus 7, even in the image forming apparatus 400 that laterally conveys the recording medium S.

The configuration of the image forming apparatus 1 according to a fourth embodiment is the same as the configuration according to the first embodiment. The present embodiment differs from the first embodiment in that the internal unit to be attached and detached is not the exposure apparatus 7 but a discharge unit 70. The present embodiment (described below) has a similar configuration to that according to the first embodiment, except for characteristic configurations, and thus the redundant descriptions will be omitted.

### (Detaching Discharge Tray and Internal Unit)

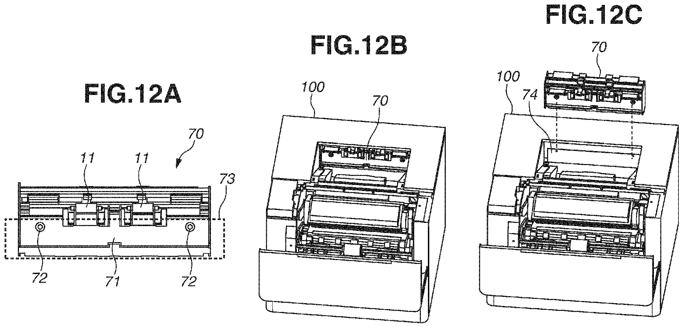

Fig. 12A illustrates the discharge unit 70 as an internal unit according to the present embodiment when viewed from the downstream side in the recording medium S conveyance direction. The discharge unit 70 includes discharge rollers 11 for discharging the recording medium S having passed through the fixing apparatus 10 onto the discharge tray 12, and a discharge frame 71 supporting the discharge rollers 11. The discharge frame 71 is provided with fixing portions 72 and is fixed to the apparatus main body 100 by the fixing members 39, such as screws. On the reverse side of the discharge unit 70, the apparatus main body 100 is provided with a frame 74 (illustrated in Fig. 12C), and the fixing members 39 penetrate through the discharge unit 70 to fix the discharge unit 70 to the frame 74.

Referring to Fig. 12A, a part 73 drawn with dotted lines is a part corresponding to the stacking wall 28 (illustrated in Fig. 3A) of the discharge tray 12 included in the discharge tray unit 21. More specifically, in a state where the discharge tray 12 is attached to the apparatus main body 100, a part of the discharge unit 70 including the fixing portions 72 is covered by the stacking wall 28.

The user can detach the discharge tray 12 from the apparatus main body 100 with a similar procedure to the procedures according to the first embodiment. As illustrated in Fig. 12B, when the discharge tray 12 is detached from the apparatus main body 100, the fixing portions 72 of the discharge unit 70 covered by the stacking wall 28 are exposed to the outside. As illustrated in Fig. 12C, removing the fixing members 39 allows the user to detach the discharge unit 70 from the apparatus main body 100.

### (Effects of Present Embodiment)

According to the configuration of the present embodiment, detaching the discharge tray 12 allows the discharge unit 70 disposed on the rear face of the discharge tray 12 to be attached and detached.

Although the present embodiment has been described above centering on a configuration in which the discharge unit 70 can be accessed based on the configuration of the first embodiment, the present invention is not limited thereto. Configurations of a second and a third embodiments are also applicable.

### <Modifications>

The first to the fourth embodiments have been described above centering on a configuration in which the front door 13 and the left door 62 are opened to detach the discharge tray 12 from the apparatus main body 100. The front door 13 and the left door 62 have been described above as doors for use in replacement of the process cartridge 6. However, the present invention is not limited thereto. Opening the front door 13 and the left door 62 may allow a waste toner box for collecting waste toner generated during image forming to be replaced. Alternatively, opening the front door 13 and the left door 62 may move a guide member forming the conveyance path of the recording medium S to open up the conveyance path. In this configuration, in a case where a jam occurs, the user can take the recording medium S out of the apparatus main body 100.

According to the above-described first to third embodiments, the discharge tray unit 21 includes three different parts which are the discharge tray 12 including the stacking surface 29 and the stacking wall 28, the left-hand side wall 31, and the right-hand side wall 32, and thus it is possible to separately detach the discharge tray 12. However, the present invention is not limited thereto. Similar effects can also be obtained by separating the stacking surface 29 and the stacking wall 28 of the discharge tray 12, disposing the stacking wall 28 in the apparatus main body 100, and attaching and detaching the discharge tray 12 having the stacking surface 29.

In the above-described first to third embodiments, the internal unit is the exposure apparatus 7. In the above-described fourth embodiment, the internal unit is the discharge unit 70. However, the internal unit is not limited thereto.

For example, the internal unit may be a bundle wire extending over the left-hand side wall 31 and the right-hand side wall 32 or an electrical circuit board. In this case, the left-hand side wall 31 and the right-hand side wall 32 may be configured to be detached at the same time, together with the discharge tray 12.

In the above-described first to fourth embodiments, the accessibility to an internal unit is defined, for example, based on three different viewpoints. One viewpoint is that the opening 200 (illustrated in Fig. 7B), formed by detaching the discharge tray 12 from the apparatus main body 100, is larger in size (outer shape) than the internal unit. Another viewpoint is that, when the discharge tray 12 is detached from the apparatus main body 100, the fixing members 39 that fix the internal unit to the apparatus main body 100 are exposed to the outside. Still another viewpoint is that, when the discharge tray 12 is detached from the apparatus main body 100, the entire internal unit is exposed to the outside.

While the present invention has been described with reference to embodiments, it is to be understood that the invention is not limited to the disclosed embodiments. The scope of the following claims is to be accorded the broadest interpretation.

## Claims

1. An image forming apparatus (1; 300; 400) for forming an image on a recording medium, the image forming apparatus comprising:
a discharge tray (21) for supporting the recording medium, on which an image has been formed and which has been discharged to an outside of an apparatus main body (100) of the image forming apparatus (1; 300; 400);
internal means (7; 70) which is any one of scanner means for irradiating an image bearing member with light or a bundle wire extending over a left-hand side wall (31) and a right-hand side wall (32) of the discharge tray (21) or an electrical circuit board, disposed inside the apparatus main body (100), for operating in an image forming operation; and
a door (13, 13a; 62, 62a) serving as a part of outer surface members of the apparatus main body (100), the door (13, 13a; 62, 62a) being opened and closed to expose and cover an inside of the apparatus main body (100) to the outside,
wherein, by opening of the door (13, 13a; 62, 62a), a fixing member (39) that fixes the discharge tray (21) to the apparatus main body (100) is exposed to the outside, and removing of the fixing member (39) from the apparatus main body (100) allows the discharge tray (21) to be detached from the apparatus main body (100) without removing the outer surface members other than the door (13, 13a; 62, 62a), and
wherein detaching of the discharge tray (21) from the apparatus main body (100) allows the internal means (7, 70) to be accessed.

2. The image forming apparatus (1; 300; 400) according to claim 1,
wherein the left-hand side wall (31) and the right-hand side wall (32) are each disposed on a different one of both edges of the discharge tray (21) in a recording medium width direction perpendicularly intersecting with a discharge direction of the recording medium discharged onto the discharge tray (21), the left-hand side wall (31) and the right-hand side wall (32) being for regulating a widthwise position of the recording medium supported by the discharge tray (21),
wherein, in a state where the left-hand side wall (31) and the right-hand side wall (32) are attached to the apparatus main body (100), the discharge tray (21) is separated from the left-hand side wall (31) and the right-hand side wall (32) and is detached from the apparatus main body (100).

3. The image forming apparatus according to claim 1 or 2, further comprising:
a cartridge (6) for being attached to and detached from the apparatus main body,
wherein opening of the door allows the cartridge (6) to be attached to and detached from the apparatus main body (100).

4. The image forming apparatus according to claim 1 or 2, further comprising:
a guide member for forming a conveyance path of the recording medium,
wherein, by opening of the door (13, 13a; 62, 62a), the guide member moves to open up the conveyance path.

5. The image forming apparatus according to claim 1 or 2, further comprising:
a waste toner box for being attached to and detached from the apparatus main body (100),
wherein opening of the door (13, 13a; 62, 62a) allows the waste toner box to be attached to and detached from the apparatus main body (100).

6. The image forming apparatus according to any one of claims 1 to 5,
wherein the internal means (7; 70) is disposed below the discharge tray (21) in a vertical direction, and
wherein, when viewed from an upper side to a lower side in the vertical direction, an opening formed by detaching the discharge tray (21) from the apparatus main body (100) is larger in size than the internal means.

7. An image forming apparatus (1; 300; 400) for forming an image on a recording medium, the image forming apparatus comprising:
a discharge tray (21) for supporting the recording medium, on which an image has been formed and which has been discharged to an outside of an apparatus main body (100) of the image forming apparatus (1; 300; 400);
internal means (7; 70), disposed inside the apparatus main body (100), for operating in an image forming operation or a conveyance operation for the recording medium;
a door (13, 13a; 62, 62a) serving as a part of outer surface members of the apparatus main body (100), the door (13, 13a; 62, 62a) being opened and closed to expose and cover an inside of the apparatus main body (100) to the outside; and
a cartridge (6) for being attached to and detached from the apparatus main body,
wherein opening of the door allows the cartridge (6) to be attached to and detached from the apparatus main body (100),
wherein, by opening of the door (13, 13a; 62, 62a), a fixing member (39) that fixes the discharge tray (21) to the apparatus main body (100) is exposed to the outside, and removing of the fixing member (39) from the apparatus main body (100) allows the discharge tray (21) to be detached from the apparatus main body (100) without removing the outer surface members other than the door (13, 13a; 62, 62a), and
wherein detaching of the discharge tray (21) from the apparatus main body (100) allows the internal means (7, 70) to be accessed.

8. The image forming apparatus (1; 300; 400) according to claim 7, further comprising:
a first side wall (31) and a second side wall (32) each disposed on a different one of both edges of the discharge tray (21) in a recording medium width direction perpendicularly intersecting with a discharge direction of the recording medium discharged onto the discharge tray (21), the first side wall (31) and the second side wall (32) being for regulating a widthwise position of the recording medium supported by the discharge tray (21),
wherein, in a state where the first side wall (31) and the second side wall (32) are attached to the apparatus main body (100), the discharge tray (21) is separated from the first side wall (31) and the second side wall (32) and is detached from the apparatus main body (100).

9. The image forming apparatus according to claims 7 and 8,
wherein the internal means (7; 70) is disposed below the discharge tray (21) in a vertical direction, and
wherein, when viewed from an upper side to a lower side in the vertical direction, an opening formed by detaching the discharge tray (21) from the apparatus main body (100) is larger in size than the internal means.

10. The image forming apparatus according to any one of claims 7 and 8,
wherein the discharge tray (21) includes a stacking surface for stacking the discharged recording medium, and a stacking wall (28) for regulating a position of an upstream end of the recording medium in a discharge direction of the recording medium discharged onto the stacking surface, and
wherein the internal means is disposed on an upstream side of the stacking wall (28) in the discharge direction, and a part of the internal means covered by the stacking wall (28) is exposed to the outside by detaching the discharge tray (21).

11. The image forming apparatus according to claim 10, wherein the internal means (7; 70) is discharge means for discharging the recording medium, on which an image has been formed, onto the discharge tray (21).

12. The image forming apparatus according to any one of claims 1 to 11, further comprising a document reading apparatus (50) disposed above the discharge tray in a vertical direction, the document reading apparatus (50) being for reading a document.

13. The image forming apparatus according to any one of claims 1 to 12, wherein the door (13, 13a; 62, 62a) is disposed on a downstream side in a discharge direction of the recording medium discharged onto the discharge tray (21).

14. The image forming apparatus according to any one of claims 1 to 13, further comprising:
a sheet cassette (2) for being attached to and detached from the apparatus main body (100) and for supporting the recording medium,
wherein an attachment and detachment direction of the sheet cassette (2) is parallel to a discharge direction of the recording medium discharged onto the discharge tray (21).

15. The image forming apparatus according to any one of claims 1 to 14, further comprising:
a sheet cassette (2) for being attached to and detached from the apparatus main body (100) and for supporting the recording medium,
wherein an attachment and detachment direction of the sheet cassette (2) is perpendicular to a discharge direction of the recording medium discharged onto the discharge tray (21).

## Patentansprüche

1. Bilderzeugungsvorrichtung (1; 300; 400) zum Erzeugen eines Bildes auf einem Aufzeichnungsmedium, wobei die Bilderzeugungsvorrichtung umfasst:
ein Ausgabefach (21) zum Tragen des Aufzeichnungsmediums, auf dem ein Bild erzeugt worden ist und das zu einer Außenseite eines Vorrichtungshauptkörpers (100) der Bilderzeugungsvorrichtung (1; 300; 400) ausgegeben worden ist;
eine interne Einrichtung (7; 70), die eine von einer Scannereinrichtung zum Bestrahlen eines Bildträgerelements mit Licht oder einem Drahtbündel, das sich über eine linke Seitenwand (31) und eine rechte Seitenwand (32) des Ausgabefachs (21) erstreckt, oder einer elektrischen Leiterplatte ist, die innerhalb des Vorrichtungshauptkörpers (100) angeordnet ist, um in einem Bilderzeugungsvorgang zu arbeiten; und
eine Tür (13, 13a; 62, 62a), die als ein Teil von Außenflächenelementen des Vorrichtungshauptkörpers (100) dient, wobei die Tür (13, 13a; 62, 62a) geöffnet und geschlossen wird, um ein Inneres des Vorrichtungshauptkörpers (100) zur Außenseite freizulegen und abzudecken,
wobei durch ein Öffnen der Tür (13, 13a; 62, 62a) ein Befestigungselement (39), welches das Ausgabefach (21) am Vorrichtungshauptkörper (100) befestigt, zur Außenseite freiliegt, und ein Entfernen des Befestigungselements (39) vom Vorrichtungshauptkörper (100) ermöglicht, das Ausgabefach (21) vom Vorrichtungshauptkörper (100) zu lösen, ohne andere Außenflächenelemente als die Tür (13, 13a; 62, 62a) zu entfernen, und
wobei ein Lösen des Ausgabefachs (21) vom Vorrichtungshauptkörper (100) ermöglicht, auf die interne Einrichtung (7, 70) zuzugreifen.

2. Bilderzeugungsvorrichtung (1; 300; 400) nach Anspruch 1,
wobei die linke Seitenwand (31) und die rechte Seitenwand (32) jeweils an einer anderen der beiden Kanten des Ausgabefachs (21) in einer Aufzeichnungsmedium-Breitenrichtung angeordnet sind, die sich senkrecht mit einer Ausgaberichtung des auf das Ausgabefach (21) ausgegebenen Aufzeichnungsmediums schneidet, wobei die linke Seitenwand (31) und die rechte Seitenwand (32) zum Regulieren einer Breitenposition des Aufzeichnungsmediums dienen, welches durch das Ausgabefach (21) getragen wird,
wobei in einem Zustand, in welchem die linke Seitenwand (31) und die rechte Seitenwand (32) am Vorrichtungshauptkörper (100) angebracht sind, das Ausgabefach (21) von der linken Seitenwand (31) und der rechten Seitenwand (32) getrennt ist und vom Vorrichtungshauptkörper (100) gelöst ist.

3. Bilderzeugungsvorrichtung nach Anspruch 1 oder 2, ferner umfassend:
eine Kartusche (6) zum Anbringen am Vorrichtungshauptkörper und Lösen von diesem,
wobei ein Öffnen der Tür ermöglicht, die Kartusche (6) am Vorrichtungshauptkörper (100) anzubringen und von diesem zu lösen.

4. Bilderzeugungsvorrichtung nach Anspruch 1 oder 2, ferner umfassend:
ein Führungselement zum Erzeugen eines Transportwegs des Aufzeichnungsmediums,
wobei sich durch ein Öffnen der Tür (13, 13a; 62, 62a) das Führungselement bewegt, um den Transportweg zu öffnen.

5. Bilderzeugungsvorrichtung nach Anspruch 1 oder 2, ferner umfassend:
einen Abfalltonerkasten zum Anbringen am Vorrichtungshauptkörper (100) und Lösen von diesem,
wobei ein Öffnen der Tür (13, 13a; 62, 62a) ermöglicht, den Abfalltonerkasten am Vorrichtungshauptkörper (100) anzubringen und von diesem zu lösen.

6. Bilderzeugungsvorrichtung nach einem der Ansprüche 1 bis 5,
wobei die interne Einrichtung (7; 70) in einer vertikalen Richtung unter dem Ausgabefach (21) angeordnet ist, und
wobei, bei Betrachtung in der vertikalen Richtung von einer oberen Seite zu einer unteren Seite, eine Öffnung, die durch Lösen des Ausgabefachs (21) vom Vorrichtungshauptkörper (100) gebildet wird, größer ist als die interne Einrichtung.

7. Bilderzeugungsvorrichtung (1; 300; 400) zum Erzeugen eines Bildes auf einem Aufzeichnungsmedium, wobei die Bilderzeugungsvorrichtung umfasst:
ein Ausgabefach (21) zum Tragen des Aufzeichnungsmediums, auf dem ein Bild erzeugt worden ist und das zu einer Außenseite eines Vorrichtungshauptkörpers (100) der Bilderzeugungsvorrichtung (1; 300; 400) ausgegeben worden ist;
eine interne Einrichtung (7; 70), die innerhalb des Vorrichtungshauptkörpers (100) angeordnet ist, um in einem Bilderzeugungsvorgang oder einem Transportvorgang für das Aufzeichnungsmedium zu arbeiten;
eine Tür (13, 13a; 62, 62a), die als ein Teil von Außenflächenelementen des Vorrichtungshauptkörpers (100) dient, wobei die Tür (13, 13a; 62, 62a) geöffnet und geschlossen wird, um ein Inneres des Vorrichtungshauptkörpers (100) zur Außenseite freizulegen und abzudecken; und
eine Kartusche (6) zum Anbringen am Vorrichtungshauptkörper und Lösen von diesem,
wobei ein Öffnen der Tür ermöglicht, die Kartusche (6) am Vorrichtungshauptkörper (100) anzubringen und von diesem zu lösen,
wobei durch ein Öffnen der Tür (13, 13a; 62, 62a) ein Befestigungselement (39), welches das Ausgabefach (21) am Vorrichtungshauptkörper (100) befestigt, zur Außenseite freiliegt, und ein Entfernen des Befestigungselements (39) vom Vorrichtungshauptkörper (100) ermöglicht, das Ausgabefach (21) vom Vorrichtungshauptkörper (100) zu lösen, ohne andere Außenflächenelemente als die Tür (13, 13a; 62, 62a) zu entfernen, und
wobei ein Lösen des Ausgabefachs (21) vom Vorrichtungshauptkörper (100) ermöglicht, auf die interne Einrichtung (7, 70) zuzugreifen.

8. Bilderzeugungsvorrichtung (1; 300; 400) nach Anspruch 7, ferner umfassend:
eine erste Seitenwand (31) und eine zweite Seitenwand (32), die jeweils an einer anderen der beiden Kanten des Ausgabefachs (21) in einer Aufzeichnungsmedium-Breitenrichtung angeordnet sind, die sich senkrecht mit einer Ausgaberichtung des auf das Ausgabefach (21) ausgegebenen Aufzeichnungsmediums schneidet, wobei die erste Seitenwand (31) und die zweite Seitenwand (32) zum Regulieren einer Breitenposition des Aufzeichnungsmediums dienen, welches durch das Ausgabefach (21) getragen wird,
wobei in einem Zustand, in welchem die erste Seitenwand (31) und die zweite Seitenwand (32) am Vorrichtungshauptkörper (100) angebracht sind, das Ausgabefach (21) von der ersten Seitenwand (31) und der zweiten Seitenwand (32) getrennt ist und vom Vorrichtungshauptkörper (100) gelöst ist.

9. Bilderzeugungsvorrichtung nach den Ansprüchen 7 und 8,
wobei die interne Einrichtung (7; 70) in einer vertikalen Richtung unter dem Ausgabefach (21) angeordnet ist, und
wobei, bei Betrachtung in der vertikalen Richtung von einer oberen Seite zu einer unteren Seite, eine Öffnung, die durch Lösen des Ausgabefachs (21) vom Vorrichtungshauptkörper (100) gebildet wird, größer ist als die interne Einrichtung.

10. Bilderzeugungsvorrichtung nach einem der Ansprüche 7 und 8,
wobei das Ausgabefach (21) eine Stapelfläche zum Stapeln des ausgegebenen Aufzeichnungsmediums und eine Stapelwand (28) zum Regulieren einer Position eines stromaufwärtigen Endes des Aufzeichnungsmediums in einer Ausgaberichtung des auf die Stapelfläche ausgegebenen Aufzeichnungsmediums enthält, und
wobei die interne Einrichtung in der Ausgaberichtung auf einer stromaufwärtigen Seite der Stapelwand (28) angeordnet ist und ein Teil der internen Einrichtung, welcher durch die Stapelwand (28) abgedeckt ist, durch Lösen des Ausgabefachs (21) zur Außenseite freiliegt.

11. Bilderzeugungsvorrichtung nach Anspruch 10, wobei die interne Einrichtung (7; 70) eine Ausgabeeinrichtung zum Ausgeben des Aufzeichnungsmediums, auf dem ein Bild erzeugt worden ist, auf das Ausgabefach (21) ist.

12. Bilderzeugungsvorrichtung nach einem der Ansprüche 1 bis 11, ferner umfassend eine Dokumentenlesevorrichtung (50), welche in einer vertikalen Richtung über dem Ausgabefach angeordnet ist, wobei die Dokumentenlesevorrichtung (50) zum Lesen eines Dokuments dient.

13. Bilderzeugungsvorrichtung nach einem der Ansprüche 1 bis 12, wobei die Tür (13, 13a; 62, 62a) an einer stromabwärtigen Seite in einer Ausgaberichtung des Aufzeichnungsmediums angeordnet ist, welches auf das Ausgabefach (21) ausgegeben wird.

14. Bilderzeugungsvorrichtung nach einem der Ansprüche 1 bis 13, ferner umfassend:
eine Bogenkassette (2) zum Anbringen am Vorrichtungshauptkörper (100) und Lösen von diesem und zum Tragen des Aufzeichnungsmediums,
wobei eine Anbring- und Löserichtung der Bogenkassette (2) parallel zu einer Ausgaberichtung des Aufzeichnungsmediums verläuft, welches auf das Ausgabefach (21) ausgegeben wird.

15. Bilderzeugungsvorrichtung nach einem der Ansprüche 1 bis 14, ferner umfassend:
eine Bogenkassette (2) zum Anbringen am Vorrichtungshauptkörper (100) und Lösen von diesem und zum Tragen des Aufzeichnungsmediums,
wobei eine Anbring- und Löserichtung der Bogenkassette (2) senkrecht zu einer Ausgaberichtung des Aufzeichnungsmediums verläuft, welches auf das Ausgabefach (21) ausgegeben wird.

## Revendications

1. Appareil de formation d'image (1 ; 300 ; 400) pour former une image sur un support d'enregistrement, l'appareil de formation d'image comprenant :
un bac de décharge (21) pour supporter le support d'enregistrement, sur lequel une image a été formée et qui a été déchargée vers l'extérieur d'un corps principal d'appareil (100) de l'appareil de formation d'image (1 ; 300 ; 400) ;
un moyen interne (7 ; 70) qui est l'un quelconque d'un moyen de scanner pour irradier un organe porteur d'image avec de la lumière ou un fil de faisceau s'étendant sur une paroi latérale gauche (31) et une paroi latérale droite (32) du bac de décharge (21) ou une carte de circuit électrique, disposée à l'intérieur du corps principal d'appareil (100), pour fonctionner dans une opération de formation d'image ; et
une porte (13, 13a ; 62, 62a) servant de partie d'organes de surface externe du corps principal d'appareil (100), la porte (13, 13a ; 62, 62a) étant ouverte et fermée pour exposer et recouvrir un intérieur du corps principal d'appareil (100) vers l'extérieur,
dans lequel, par l'ouverture de la porte (13, 13a ; 62, 62a), un organe de fixation (39) qui fixe le bac de décharge (21) au corps principal d'appareil (100) est exposé vers l'extérieur, et le retrait de l'organe de fixation (39) du corps principal d'appareil (100) permet de détacher le bac de décharge (21) du corps principal d'appareil (100) sans retirer les organes de surface externe autres que la porte (13, 13a ; 62, 62a), et
dans lequel le détachement du bac de décharge (21) du corps principal d'appareil (100) permet d'accéder au moyen interne (7, 70).

2. Appareil de formation d'image (1 ; 300 ; 400) selon la revendication 1,
dans lequel la paroi latérale gauche (31) et la paroi latérale droite (32) sont chacune disposées sur l'un différent de deux bords du bac de décharge (21) dans une direction de largeur de support d'enregistrement croisant perpendiculairement une direction de décharge du support d'enregistrement déchargé sur le bac de décharge (21), la paroi latérale gauche (31) et la paroi latérale droite (32) étant destinées à réguler une position en largeur du support d'enregistrement supporté par le bac de décharge (21),
dans lequel, dans un état où la paroi latérale gauche (31) et la paroi latérale droite (32) sont fixées au corps principal d'appareil (100), le bac de décharge (21) est séparé de la paroi latérale gauche (31) et de la paroi latérale droite (32) et est détaché du corps principal d'appareil (100).

3. Appareil de formation d'image selon la revendication 1 ou 2, comprenant en outre :
une cartouche (6) pour être fixée et détachée au/du corps principal d'appareil,
dans lequel l'ouverture de la porte permet de fixer et de détacher la cartouche (6) au/du corps principal d'appareil (100).

4. Appareil de formation d'image selon la revendication 1 ou 2, comprenant en outre :
un organe de guidage pour former un trajet de transport du support d'enregistrement,
dans lequel, par l'ouverture de la porte (13, 13a ; 62, 62a), l'organe de guidage se déplace pour ouvrir le trajet de transport.

5. Appareil de formation d'image selon la revendication 1 ou 2, comprenant en outre :
une boîte de toner usagé pour être fixée et détachée au/du corps principal d'appareil (100),
dans lequel l'ouverture de la porte (13, 13a ; 62, 62a) permet de fixer et de détacher la boîte de toner usagé au/du corps principal d'appareil (100).

6. Appareil de formation d'image selon l'une quelconque des revendications 1 à 5,
dans lequel le moyen interne (7 ; 70) est disposé sous le bac de décharge (21) dans une direction verticale, et
dans lequel, lorsqu'elle est vue d'un côté supérieur vers un côté inférieur dans la direction verticale, une ouverture formée en détachant le bac de décharge (21) du corps principal d'appareil (100) est plus grande que le moyen interne.

7. Appareil de formation d'image (1 ; 300 ; 400) pour former une image sur un support d'enregistrement, l'appareil de formation d'image comprenant :
un bac de décharge (21) pour supporter le support d'enregistrement, sur lequel une image a été formée et qui a été déchargée vers l'extérieur d'un corps principal d'appareil (100) de l'appareil de formation d'image (1 ; 300 ; 400) ;
un moyen interne (7 ; 70), disposé à l'intérieur du corps principal d'appareil (100), pour fonctionner dans une opération de formation d'image ou une opération de transport pour le support d'enregistrement ;
une porte (13, 13a ; 62, 62a) servant de partie d'organes de surface externe du corps principal d'appareil (100), la porte (13, 13a ; 62, 62a) étant ouverte et fermée pour exposer et recouvrir un intérieur du corps principal d'appareil (100) vers l'extérieur ; et
une cartouche (6) pour être fixée et détachée au/du corps principal d'appareil,
dans lequel l'ouverture de la porte permet de fixer et de détacher la cartouche (6) au/du corps principal d'appareil (100),
dans lequel, par l'ouverture de la porte (13, 13a ; 62, 62a), un organe de fixation (39) qui fixe le bac de décharge (21) au corps principal d'appareil (100) est exposé vers l'extérieur, et le retrait de l'organe de fixation (39) du corps principal d'appareil (100) permet de détacher le bac de décharge (21) du corps principal d'appareil (100) sans retirer les organes de surface externe autres que la porte (13, 13a ; 62, 62a), et
dans lequel le détachement du bac de décharge (21) du corps principal d'appareil (100) permet d'accéder au moyen interne (7, 70).

8. Appareil de formation d'image (1 ; 300 ; 400) selon la revendication 7, comprenant en outre :
une première paroi latérale (31) et une seconde paroi latérale (32) disposées chacune sur l'un différent de deux bords différents du bac de décharge (21) dans une direction de largeur de support d'enregistrement croisant perpendiculairement une direction de décharge du support d'enregistrement déchargé sur le bac de décharge (21), la première paroi latérale (31) et la seconde paroi latérale (32) étant destinées à réguler une position en largeur du support d'enregistrement supporté par le bac de décharge (21),
dans lequel, dans un état où la première paroi latérale (31) et la seconde paroi latérale (32) sont fixées au corps principal d'appareil (100), le bac de décharge (21) est séparé de la première paroi latérale (31) et de la seconde paroi latérale (32) et est détaché du corps principal d'appareil (100).

9. Appareil de formation d'image selon les revendications 7 et 8,
dans lequel le moyen interne (7 ; 70) est disposé sous le bac de décharge (21) dans une direction verticale, et
dans lequel, lorsqu'elle est vue d'un côté supérieur vers un côté inférieur dans la direction verticale, une ouverture formée en détachant le bac de décharge (21) du corps principal d'appareil (100) est plus grande que le moyen interne.

10. Appareil de formation d'image selon l'une quelconque des revendications 7 et 8,
dans lequel le bac de décharge (21) comporte une surface d'empilage pour empiler le support d'enregistrement déchargé, et une paroi d'empilage (28) pour réguler une position d'une extrémité amont du support d'enregistrement dans une direction de décharge du support d'enregistrement déchargé sur la surface d'empilage, et
dans lequel le moyen interne est disposé sur un côté amont de la paroi d'empilage (28) dans la direction de décharge, et une partie du moyen interne couverte par la paroi d'empilage (28) est exposée vers l'extérieur en détachant le bac de décharge (21).

11. Appareil de formation d'image selon la revendication 10, dans lequel le moyen interne (7 ; 70) est un moyen de décharge pour décharger le support d'enregistrement, sur lequel une image a été formée, sur le bac de décharge (21).

12. Appareil de formation d'image selon l'une quelconque des revendications 1 à 11, comprenant en outre un appareil (50) de lecture de document disposé au-dessus du bac de décharge dans une direction verticale, l'appareil (50) de lecture de document étant destiné à la lecture d'un document.

13. Appareil de formation d'image selon l'une quelconque des revendications 1 à 12, dans lequel la porte (13, 13a ; 62, 62a) est disposée sur un côté aval dans une direction de décharge du support d'enregistrement déchargé sur le bac de décharge (21).

14. Appareil de formation d'image selon l'une quelconque des revendications 1 à 13, comprenant en outre :
une cassette de feuille (2) pour être fixée et détachée au/du corps principal d'appareil (100) et pour supporter le support d'enregistrement,
dans lequel une direction de fixation et de détachement de la cassette de feuille (2) est parallèle à une direction de décharge du support d'enregistrement déchargé sur le bac de décharge (21).

15. Appareil de formation d'image selon l'une quelconque des revendications 1 à 14, comprenant en outre :
une cassette de feuille (2) pour être fixée et détachée au/du corps principal d'appareil (100) et pour supporter le support d'enregistrement,
dans lequel une direction de fixation et de détachement de la cassette de feuille (2) est perpendiculaire à une direction de décharge du support d'enregistrement déchargé sur le bac de décharge (21).
